# DEMANDE DE BREVET EUROPEEN

(11) **EP 2 079 031 A2**
(43) Date de publication de la demande: **15.07.2009**
(21) Numéro de dépôt: 08291256.9
(22) Date de dépôt: 30.12.2008
(51) Int. Cl.: G06F 17/30, H04L 12/40, H04L 29/06

(54) **Réseau de communication de transfert d'informations entre un terminal mobile et des serveurs sources, ainsi que terminal et procédé de gestion de transfert d'informations dans un tel réseau**

(30) Priorité: 08.01.2008 FR 0850079; 01.02.2008 US 25360 P; 31.03.2008 US 58953
(71) Demandeur: Miyowa, 13002 Marseille (FR)
(72) Inventeur: Colon, François, 13013 Marseille (FR)
(74) Mandataire: Novagraaf IP

(57) **Abrégé**

L'invention vise à diminuer le nombre d'applications informatiques à intégrer dans un terminal mobile afin de mettre en oeuvre les fonctionnalités proposées à un utilisateur : IM, MAIL, BLOG, etc. L'invention vise également à simplifier les réseaux de communication, les échanges entre des terminaux mobiles et des serveurs sources, ainsi que la gestion des formats.

Un réseau de communication comporte au moins un terminal mobile (TM) configuré pour recevoir des informations dans un format cible, des serveurs sources (SS1, SS2, SS3, SS4) configurés pour délivrer des informations dans des formats source. Selon l'invention, un serveur intermédiaire (SPV), indépendant des serveurs sources (SS1, SS2, SS3, SS4), est agencé entre le terminal mobile (TM) et lesdits serveurs sources de manière à ce que les informations à destination dudit terminal mobile transitent par le serveur intermédiaire. Le serveur intermédiaire (SPV) est configuré pour recevoir des informations aux formats sources provenant des serveurs sources (SS1, SS2, SS3, SS4). Le serveur intermédiaire (SPV) est configuré pour transformer au format cible les informations reçues aux formats sources, et le serveur intermédiaire (SPV) est configuré pour transmettre au terminal mobile (TM) les informations dans le format cible.

## Description

L'invention a pour objet un réseau de communication permettant d'échanger des informations telles que des requêtes entre un terminal mobile et plusieurs serveurs sources. Elle concerne également un procédé permettant de gérer le transfert d'informations dans un tel réseau de communication ainsi qu'un terminal apte à échanger des informations dans un tel réseau.

L'invention se rapporte au domaine technique général des télécommunications.

Les terminaux mobiles - tels que téléphones mobiles, ordinateurs portables, PDA, BlackBerry®) - sont généralement équipés d'un certain nombre de fonctionnalités permettant, par exemple, de consulter des mails (MAIL), d'ouvrir une session de messagerie instantanée (IM), de communiquer sur un Blog (BLOG). Chacune de ces fonctionnalités est mise en oeuvre par une application informatique spécifique intégrée dans le terminal mobile.

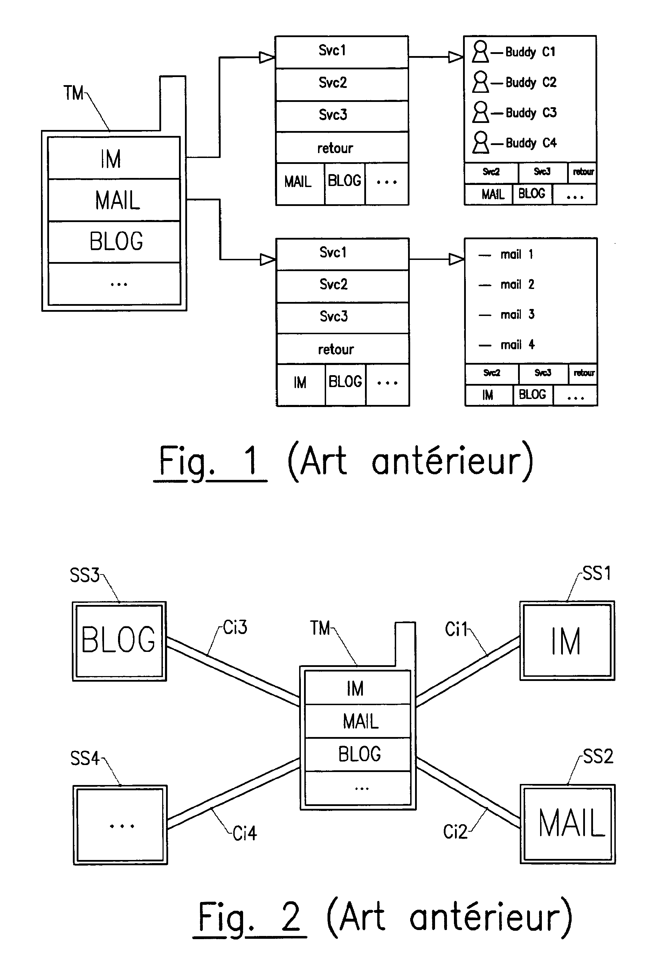

La figure 1 schématise différents types de représentation d'écran d'un terminal mobile TM lors de l'activation de ces fonctionnalités. Initialement, l'écran affiche les différentes fonctionnalités (IM, MAIL, BLOG ou autre) sous forme de bandes, d'icônes, de menus déroulants, etc. L'utilisateur peut, au moyen des touches de navigation de son clavier, sélectionner la fonctionnalité souhaitée.

Dans le cas où l'utilisateur sélectionne la fonction messagerie instantanée (IM), une application informatique spécifique (AIM®, ICQ®, Windows Live Messenger®, Yahoo !®, Messenger®, ···) est lancée de manière à ce que le terminal mobile TM puisse se connecter à un serveur de messagerie instantanée IM (Microsoft Live Communication Server®, Sun Java System Instant Messaging®, Jabberd®, Groupwise Messenger®, ···) et utiliser les services de messagerie instantanée traditionnellement proposés : conversation Svc1, gestion des listes des contacts Svc2, gestion des statuts Svc3, etc. Ces services Svc1, Svc2, Svc3, se présentent sur l'écran du terminal mobile TM sous forme de bandes, d'icônes, de menus déroulants, etc. L'utilisateur peut alors sélectionner le service souhaité au moyen des touches de navigation de son clavier.

À titre d'exemple, lorsque l'utilisateur actionne le service de conversation Svc1, le serveur IM renvoie vers le terminal mobile TM, la liste de contacts de l'utilisateur (ou « Buddy list » en anglais), ladite liste s'affichant sur l'écran dudit terminal.

Dans le cas où l'utilisateur sélectionne la fonction mail (MAIL), une nouvelle application informatique spécifique (Google Mail®, SFR Mail®, Orange Mail®, Outlook®···) est lancée de manière à ce que le terminal mobile TM puisse se connecter à un serveur MAIL (SendMail®, Zimbra®, Lotus®, Microsoft Exchange Server®, ···) et utiliser les services mail (courrier électronique) traditionnellement proposés : réception/envoi e-mail Svc1, gestion du carnet d'adresse Svc2, règles de messages Svc3, etc. Ces services se présentent sur l'écran du terminal mobile TM de la même façon que pour la fonction IM décrite précédemment.

A titre d'exemple, lorsque l'utilisateur actionne le service de réception/envoi e-mail Svc1, le serveur MAIL renvoie vers le terminal mobile TM la boîte aux lettres mails de l'utilisateur, la liste des mails s'affichant sur l'écran dudit terminal.

On comprend qu'un fonctionnement similaire est mis en oeuvre lorsque l'utilisateur sélectionne la fonction BLOG ou une autre fonction.

Les applications informatiques permettant de lancer les fonctions IM, MAIL, BLOG ou autres, sont des programmes spécifiques ayant des lignes de codes différentes selon la fonctionnalité. Ainsi, plus le nombre de fonctionnalités proposées est important, plus le terminal mobile devra intégrer des applications informatiques différentes capables de les mettre en oeuvre. Cet état des choses est un inconvénient non seulement pour les développeurs (programmation lourde et coûteuse en temps et en main d'oeuvre) mais encore pour les utilisateurs (plus le nombre de fonctionnalités proposées est important, plus le prix du terminal mobile est élevé).

La figure 2 représente de manière schématique un réseau de communication habituellement utilisé dans la téléphonie mobile, mais s'appliquant à d'autres terminaux mobiles TM similaires.

Dès que l'utilisateur choisit une fonctionnalité IM, MAIL, BLOG ou autre, et lance l'application informatique associée, son terminal mobile TM se connecte au serveur source SS1, SS2, SS3, SS4 correspondant. Toutes les informations échangées entre le terminal mobile TM et les serveurs sources SS1, SS2, SS3, SS4, transitent par des canaux d'information dédiés, respectivement Ci1, Ci2, Ci3 ou Ci4.

Les informations transitent dans ces canaux d'informations selon des protocoles spécifiques (HTTP, IP, SMTP, etc) qui définissent les règles de communication entre les terminaux mobiles TM et les serveurs sources SS1, SS2, SS3 ou SS4. En effet, les serveurs sources et les terminaux mobiles doivent pouvoir échanger leurs informations sur la base d'un langage commun (ou format commun) tel que : HTML, XML, etc. Étant donné que la nature des informations échangées entre le terminal mobile et les serveurs sources peut varier, ledit terminal mobile doit être capable de mettre en oeuvre les différents protocoles de manière à « comprendre » les informations qu'il reçoit et à les afficher sur son écran de manière intelligible pour l'utilisateur. De même, les serveurs sources SS1, SS2, SS3 ou SS4 doivent être capables de comprendre les requêtes émises par le terminal mobile TM de manière à pouvoir les traiter correctement.

Les réseaux de communication de l'art antérieur sont donc complexes, car ils multiplient le nombre de canaux d'information entre le terminal mobile et les différents serveurs sources, ainsi que le nombre de protocoles de communication permettant l'échange d'informations dans lesdits canaux. Ce dernier aspect est particulièrement contraignant pour les développeurs et les opérateurs, car de nombreuses lignes de programmes doivent être intégrées dans les terminaux mobiles et les serveurs sources.

Pour surmonter cet inconvénient, on connaît des réseaux de communication dans lesquels toutes les informations/requêtes émises vers/par le terminal mobile TM sont dans un format cible unique. De cette manière, il suffit que le terminal mobile TM intègre uniquement le protocole de communication compatible avec ce format cible pour « comprendre » les informations qu'il reçoit et les afficher sur son écran de manière intelligible pour l'utilisateur.

Toutefois, les serveurs sources SS1, SS2, SS3, SS4, stockent leurs informations sous des formats sources qui leur sont propres. Généralement, ces informations se présentent sous la forme d'une succession de lignes de codes incompréhensibles pour l'utilisateur. Il est donc nécessaire de gérer le format des informations transmises par les serveurs sources SS1, SS2, SS3, SS4 de manière à ce qu'elles puissent être comprises par le terminal mobile TM et l'utilisateur.
De même, lorsque le terminal mobile TM émet vers les serveurs sources SS1, SS2, SS3, SS4 des requêtes, ces dernières sont au format cible. Il est donc nécessaire de gérer le format des requêtes reçues par les serveurs sources SS1, SS2, SS3, SS4 de manière à ce qu'elles puissent être traitées par ces derniers.

Pour gérer ces différents formats, les serveurs sources doivent donc être configurés pour transformer :
- au format cible, les informations qu'ils transmettent au terminal mobile ;
- au format source, les requêtes qu'ils reçoivent du terminal mobile.

Bien qu'efficaces, ces applications informatiques permettant la gestion de formats sont complexes à réaliser, d'autant plus qu'elles peuvent varier selon les serveurs sources. De plus, ces applications informatiques peuvent être amenées à évoluer selon les nouveaux formats sources et/ou formats cibles utilisés dans les réseaux de communication. Il en résulte que les intégrations et/ou les modifications de ces applications informatiques sont longues et coûteuses pour les opérateurs, car un grand nombre de protocoles de gestion et de Softwares/Hardwares doit être pris en compte.

Face aux inconvénients de l'art antérieur, un premier objectif de l'invention est de diminuer le nombre d'applications informatiques devant être intégrées dans un terminal mobile afin de mettre en oeuvre toutes les fonctionnalités habituellement proposées à un utilisateur : IM, MAIL, BLOG ou autre.
Un autre objectif de l'invention est de simplifier les réseaux de communication de l'art antérieur, de manière à simplifier les échanges d'informations et de requêtes entre des terminaux mobiles et des serveurs sources.
L'invention a également pour objectif de simplifier la gestion des formats des informations telles que les requêtes échangées entre des terminaux mobiles et plusieurs serveurs sources.

L'invention propose une configuration dans laquelle le serveur intermédiaire est chargé de gérer le formatage des informations échangées entre le terminal mobile et les différents serveurs sources. De ce fait, ni le terminal mobile, ni les serveurs sources n'ont à intégrer les applications informatiques complexes mentionnées précédemment dans l'état de la technique.

Plus précisément, l'invention a pour objet un réseau de communication de transfert d'informations entre un terminal mobile et plusieurs serveurs sources comportant :
- au moins un terminal mobile configuré pour recevoir des informations dans un format cible,
- des serveurs sources configurés pour délivrer des informations dans des formats sources,
- un serveur intermédiaire indépendant des serveurs sources agencé entre le terminal mobile et lesdits serveurs sources de manière à ce que les informations à destination dudit terminal mobile transitent par ledit serveur intermédiaire,
- le serveur intermédiaire étant configuré pour recevoir des informations aux formats sources en provenance des serveurs sources,
- le serveur intermédiaire étant configuré pour transformer au format cible les informations reçues aux formats sources, et
- le serveur intermédiaire étant configuré pour transmettre au terminal mobile les informations dans le format cible.

Selon une caractéristique avantageuse de l'invention permettant de gérer efficacement des requêtes émises par le terminal mobile, sans que ce dernier ou les serveurs sources n'aient à gérer un quelconque problème de formatage,
- le terminal mobile est configuré pour émettre vers le serveur intermédiaire des requêtes initiales permettant de recevoir des informations disponibles dans les serveurs sources, lesdites requêtes initiales étant au format cible,
- le serveur intermédiaire est configuré pour :
   - analyser les requêtes initiales reçues et identifier les serveurs sources dans lesquels sont disponibles les informations demandées, et
   - émettre des requêtes relais vers les serveurs sources afin de recevoir les informations demandées, lesdites requêtes relais étant émises dans des formats sources compatibles avec lesdits serveurs sources.

Dans un mode de réalisation particulier :
- le terminal mobile est configuré pour émettre des requêtes initiales permettant de recevoir des informations disponibles dans les serveurs sources, lesdites requêtes initiales étant au format cible,
- les serveurs sources sont configurés pour traiter directement les requêtes initiales au format cible émises par le terminal mobile, et
- le serveur intermédiaire est configuré pour intercepter lesdites requêtes initiales et les rediriger telles qu'elles vers lesdits serveurs sources.

Selon une autre caractéristique avantageuse de l'invention permettant de n'utiliser qu'un protocole de messagerie instantanée pour échanger les informations et requêtes entre le terminal mobile et le serveur intermédiaire, ledit terminal mobile intègre une application informatique de messagerie instantanée, le format cible étant un format utilisé pour la messagerie instantanée, toutes les informations et requêtes transitant uniquement par un canal d'information utilisé pour la messagerie instantanée.

Préférentiellement, toutes les informations et requêtes échangées entre le terminal mobile et le serveur intermédiaire sont au format HTML, c'est-à-dire un format couramment utilisé dans les réseaux de communication.

Selon encore une autre caractéristique avantageuse de l'invention simplifiant la présentation des requêtes initiales, le terminal mobile est configuré pour afficher sur son écran lesdites requêtes en tant que contacts dans la liste de contacts de messagerie instantanée.

Selon encore une autre caractéristique de l'invention permettant d'analyser efficacement et rapidement les requêtes initiales reçues par le serveur intermédiaire, lesdites requêtes initiales affichées sur l'écran du terminal mobile sont associées à des messages textes prédéfinis, ledit serveur intermédiaire comportant une zone-mémoire dans laquelle ces messages textes sont associés aux requêtes relais destinées à être émises vers les serveurs sources afin de recevoir les informations demandées.

Selon encore une autre caractéristique de l'invention permettant de simplifier la gestion des requêtes initiales, non seulement du point de vue de l'utilisateur, mais encore du point de vue du serveur intermédiaire, ce dernier est configuré pour garder en mémoire la chronologie des différentes requêtes initiales émises par le terminal mobile de manière à ce qu'un même message texte puisse être associé à des requêtes relais différentes selon l'instant où lesdites requêtes initiales sont émises par ledit terminal mobile.

Selon encore une autre caractéristique de l'invention, le serveur intermédiaire est configuré pour transmettre au terminal mobile, en même temps que les informations demandées, une liste de requêtes initiales destinée à être affichée sous forme de messages textes sur l'écran dudit terminal mobile. De cette façon, le terminal mobile n'a pas besoin de stocker dans sa zone-mémoire la totalité des requêtes initiales susceptibles d'être émises. En effet, c'est maintenant le serveur intermédiaire qui lui propose ces requêtes au fur et à mesure des informations transmises.

Selon encore une autre caractéristique avantageuse de l'invention permettant de contrôler efficacement la connexion entre le terminal mobile et le serveur intermédiaire :
- le terminal mobile est configuré pour émettre une requête initiale de présence à destination du serveur intermédiaire, ladite requête initiale de présence contenant des informations d'identification de l'utilisateur dudit terminal,
- le serveur intermédiaire est configuré pour analyser les informations d'identification de l'utilisateur, et après vérification, autoriser la connexion avec le terminal mobile et allouer un espace mémoire dans lequel il gardera une copie des informations et requêtes qui vont circuler.

Selon encore une autre caractéristique avantageuse de l'invention permettant de contrôler efficacement la connexion entre le serveur intermédiaire et les différents serveurs sources :
- le serveur intermédiaire est configuré pour émettre des requêtes relais de présence à destination des serveurs sources, lesdites requêtes relais de présence étant dans un format compatible avec lesdits serveurs sources et contenant des informations d'identification de l'utilisateur du terminal mobile,
- les serveurs sources sont configurés pour analyser les informations d'identification de l'utilisateur, et après vérification, autoriser la connexion avec le serveur intermédiaire.

Pour éviter de modifier les protocoles d'identification intégrés dans les serveurs sources existants, la requête relais de présence émise par le serveur intermédiaire est avantageusement similaire à la requête initiale de présence émise par le terminal mobile de manière à ce que ledit serveur intermédiaire soit perçu par les serveurs sources comme étant ledit terminal mobile.

Un autre aspect de l'invention concerne un procédé pour gérer le transfert des informations dans le réseau de communication ci-dessus, dans lequel :
- au moins un terminal mobile est configuré pour recevoir des informations dans un format cible,
- des serveurs sources sont configurés pour délivrer des informations dans des formats sources,
- le terminal mobile se connecte à un serveur intermédiaire indépendant des serveurs sources,
- le serveur intermédiaire se connecte à un des serveurs sources de manière à ce que les informations à destination du terminal mobile transitent par ledit serveur intermédiaire,
- le serveur source auquel est connecté le serveur intermédiaire transmet à ce dernier des informations au format source,
- le serveur intermédiaire transforme au format cible les informations reçues au format source, et
- le serveur intermédiaire transmet vers le terminal mobile les informations au format cible.

Encore un autre aspect de l'invention concerne un terminal mobile équipé d'un écran et intégrant une application informatique de messagerie instantanée, se caractérisant par le fait qu'il est configuré pour présenter sur son écran des requêtes en tant que contacts dans sa liste de contacts de messagerie instantanée, lesdites requêtes étant associées à des messages textes prédéfinis.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 schématise différents types de représentation d'écran d'un terminal mobile de l'art antérieur lors de l'activation des fonctionnalités,
- la figure 2 représente de manière schématique un réseau de communication de l'art antérieur utilisé dans la téléphonie mobile,
- la figure 3 représente schématiquement un réseau de communication selon l'invention, le serveur intermédiaire étant connecté au serveur MAIL,
- la figure 4 représente schématiquement un réseau de communication selon l'invention, le serveur intermédiaire étant connecté au serveur IM,
- les figures 5 et 6 illustrent différentes étapes du procédé objet de l'invention,
- la figure 7 schématise chronologiquement différents types de représentation d'écran d'un terminal mobile selon l'invention.

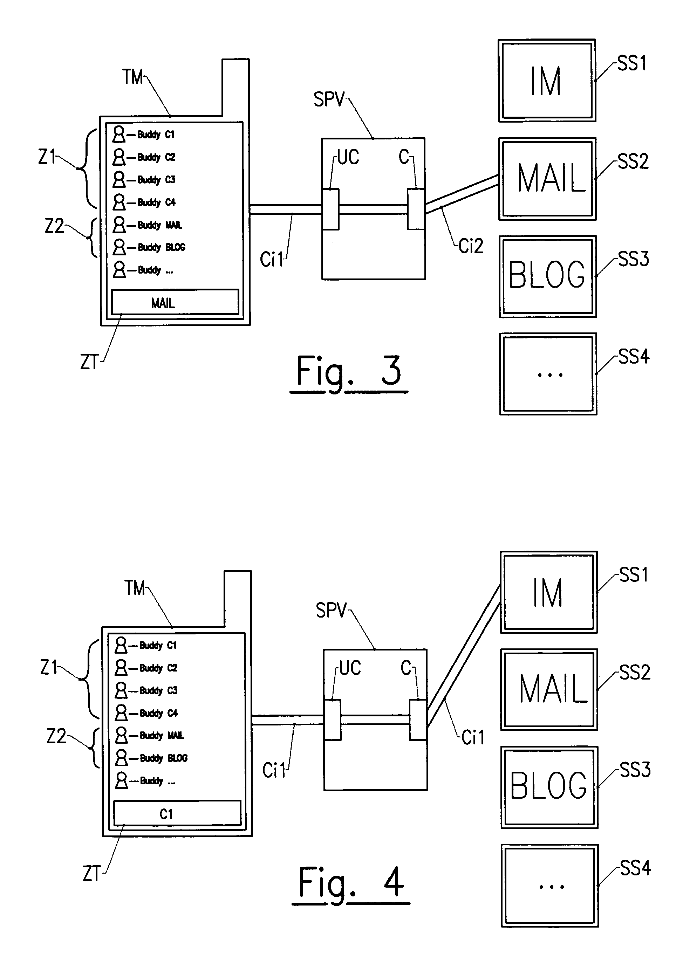

En se rapportant aux figures 3 et 4, le réseau de communication objet de l'invention comporte :
- au moins un terminal mobile TM configuré pour recevoir des informations dans un format cible,
- des serveurs sources SS1, SS2, SS3, SS4 configurés pour délivrer des informations dans des formats sources.

Les terminaux mobiles TM utilisés pour la mise en oeuvre de l'invention peuvent être des téléphones mobiles, des appareils du type assistant digital personnel (PDA), des appareils du type BlackBerry®, un ordinateur PC portable, ou tout autre terminal mobile de communication apte à se connecter dans un réseau de communication. L'invention doit être comprise comme pouvant également fonctionner avec des terminaux non mobiles tels que des ordinateurs PC fixes.

Les terminaux mobiles TM sont configurés pour délivrer des requêtes dans un format cible ainsi que pour recevoir des informations qui sont également au format cible. D'une manière bien connue de l'homme du métier, ils intègrent des applications informatiques classiques et sont équipés de processeurs, contrôleurs ou de tous autres moyens équivalents permettant de traiter les informations reçues et l'envoi des requêtes.

Les serveurs sources SS1, SS2, SS3, SS4 sont identiques à ceux connus de l'homme du métier et utilisés dans les réseaux de communication de l'art antérieur. En pratique, il s'agit de serveurs IM SS1 : Microsoft Live Communication Server®, Sun Java System Instant Messaging®, Jabberd®, Groupwise Messenger®, ou autres ; de serveurs MAIL SS2 : SendMail®, Zimbra®, Lotus®, Microsoft Exchange Server®, ou autres ; de serveurs BLOG SS3 ou de tous autres serveurs similaires SS4.

Ces serveurs sources SS1, SS2, SS3, SS4 sont configurés pour délivrer des informations et délivrer des requêtes dans des formats sources qui leur sont propres. D'une manière bien connue, ils intègrent des applications informatiques et sont équipés de processeurs, contrôleurs ou de tous autres moyens équivalents permettant le traitement des requêtes reçues et la délivrance des informations demandées.

Conformément à l'invention, le réseau de communication comporte un serveur intermédiaire SPV indépendant des serveurs sources SS1, SS2, SS3, SS4. Ce serveur intermédiaire SPV est agencé entre le terminal mobile TM et les serveurs sources SS1, SS2, SS3, SS4 de manière à ce que les informations à destination dudit terminal mobile et éventuellement les requêtes émises par ce dernier, transitent par ledit serveur intermédiaire. En pratique, le serveur intermédiaire SPV est un ordinateur ou un programme informatique configuré pour proposer certains services aux terminaux mobiles TM qui s'y connectent.

Lorsque l'utilisateur du terminal mobile TM souhaite se connecter au serveur intermédiaire SPV, une application informatique placée dans ledit terminal émet une requête initiale de présence à destination dudit serveur. Cette requête initiale de présence contient des informations d'identification de l'utilisateur du terminal mobile TM telles que l'identification dudit utilisateur et/ou un mot de passe nécessaires pour que le serveur intermédiaire SPV autorise la connexion. Il s'agit d'une gestion classique d'autorisation d'accès traitée directement dans l'unité centrale UC du serveur intermédiaire SPV. De manière avantageuse, la requête initiale de présence contient une information unique permettant d'identifier de façon unique l'utilisateur. Après analyse et vérification des informations d'identification de l'utilisateur, le serveur intermédiaire SPV autorise la connexion et alloue un espace mémoire dans lequel il gardera une copie des informations et requêtes qui vont circuler. L'analyse et la vérification des informations d'identification de l'utilisateur sont réalisées via une application informatique placée dans l'unité centrale UC. Bien que sa présence soit souhaitable, cette étape préalable d'identification n'est pas essentielle pour établir la connexion entre le terminal mobile TM et le serveur intermédiaire SPV.

Les informations et requêtes initiales échangées entre le terminal mobile TM et le serveur intermédiaire TM transitent par un canal d'information unique, selon un protocole unique Il s'agit préférentiellement du canal d'information Ci1 utilisé pour la messagerie instantanée avec un protocole utilisé pour la messagerie instantanée. En effet, il est avantageux que le terminal mobile TM intègre une application informatique de messagerie instantanée de sorte que le format cible puisse être un format utilisé pour la messagerie instantanée, préférentiellement le format HTML.

Le terminal mobile TM émet vers ledit serveur intermédiaire des requêtes initiales permettant de recevoir des informations disponibles dans les serveurs sources SS1, SS2, SS3, SS4. Les requêtes initiales peuvent par exemple consister à demander les différentes fonctionnalités disponibles, les différents services mail offerts, le contenu d'une boîte aux lettres mail, l'historique des conversations sur un blog, etc. Ces requêtes initiales sont émises au moyen d'une application informatique intégrée dans le terminal mobile TM ou de tout autre moyen équivalent habituellement utilisé par l'homme du métier. Comme vues précédemment, ces requêtes initiales sont émises au format cible et transitent par le canal d'information unique Ci1 reliant le terminal mobile TM et le serveur intermédiaire SVP.

Le serveur intermédiaire SPV analyse les requêtes initiales reçues et identifie les serveurs sources SS1, SS2, SS3 ou SS4 dans lesquels sont disponibles les informations demandées. L'analyse des requêtes initiales et l'identification du serveur source sont réalisées d'une manière connue de l'homme du métier, par l'intermédiaire de processeurs, contrôleurs, programmes ou tous autres softwares/hardwares équivalents intégrés dans l'unité centrale UC du serveur intermédiaire SPV. En pratiques, les requêtes initiales contiennent un code ou une partie de code associés aux informations demandées et au serveur source susceptible de les stocker (par exemple une adresse URL).

Dès qu'une requête initiale est traitée, le serveur intermédiaire SPV émet une requête relais vers le serveur source identifié SS1, SS2, SS3 ou SS4 afin de recevoir les informations demandées. Les requêtes relais sont émises dans des formats sources compatibles avec les serveurs sources SS1, SS2, SS3, SS4 identifiés. En résumé, les requêtes relais correspondent aux requêtes initiales, sauf qu'elles sont dans un format source compréhensible par le serveur source identifié. L'émission des requêtes relais est réalisée par l'intermédiaire de processeurs, d'applications informatiques ou tous autres softwares/hardwares équivalents habituellement utilisés par l'homme du métier et intégrés dans l'unité centrale UC du serveur intermédiaire SPV. En se rapportant aux figures 3 ou 4, le serveur intermédiaire SPV est équipé d'un connecteur C capable d'établir une connexion avec le serveur source identifié.

Le serveur source identifié SS1, SS2, SS3 ou SS4, analyse la requête relais reçue et extrait de sa zone-mémoire les informations demandées. L'analyse des requêtes relais et l'extraction des informations demandées sont réalisées d'une manière connue de l'homme du métier, par l'intermédiaire de processeurs, contrôleurs, programmes ou tous autres softwares/hardwares équivalents intégrés dans les serveurs sources. En pratique, les requêtes relais contiennent un code ou une partie de code permettant de localiser les informations demandées dans les zones-mémoire.

Une fois que la requête relais est traitée, le serveur source SS1, SS2, SS3 ou SS4 transmet les informations demandées au format source, vers le serveur intermédiaire SPV. La transmission des informations demandées est réalisée d'une manière connue de l'homme du métier, par l'intermédiaire de processeurs, applications informatiques ou tous autres softwares/hardwares équivalents intégrés dans les serveurs sources. De manière générale, les informations et requêtes relais échangées entre le serveur intermédiaire TM et les serveurs sources SS1, SS2, SS3, SS4, transitent par les canaux d'information associés aux dits serveurs sources, respectivement Ci1, Ci2, Ci3, Ci4. Les informations et requêtes relais transitent dans ces canaux selon des protocoles de communications et des formats sources propres aux serveurs sources SS1, SS2, SS3, SS4.

Quand le serveur intermédiaire SPV réceptionne les informations demandées aux formats sources, il les transforme au format cible. Cette transformation est réalisée par l'intermédiaire de processeurs, applications informatiques ou tous autres softwares/hardwares équivalents intégrés dans l'unité centrale UC du serveur intermédiaire SPV. On comprend que le serveur intermédiaire SPV est configuré de manière à pouvoir traiter plusieurs types de formats sources.

Dès que les informations sont mises au format cible, le serveur intermédiaire les transmet au terminal mobile TM. Cette transmission est réalisée d'une manière connue de l'homme du métier, par l'intermédiaire de processeurs, applications informatiques ou tous autres softwares/hardwares équivalents intégrés dans l'unité centrale UC du serveur intermédiaire SPV.

Pour établir la connexion entre le serveur intermédiaire SPV et les serveurs sources SS1, SS2, SS3, il peut être envisagé de prévoir une étape préalable où ledit serveur intermédiaire émet une requête relais de présence à destination du serveur source concerné SS1, SS2, SS3 ou SS4. La requête relais de présence est émise au moyen d'une application informatique intégrée dans l'unité centrale UC du serveur intermédiaire SPV ou de tout autre moyen équivalent habituellement utilisé par l'homme du métier. Après analyse et vérification des informations d'identification de l'utilisateur, le serveur source concerné SS1, SS2, SS3, SS4, autorise la connexion avec le serveur intermédiaire SPV. Les requêtes relais de présence peuvent être similaires à la requête initiale de présence émise par le terminal mobile TM et contenir des informations permettant d'identifier l'utilisateur. Le fait d'émettre des requêtes relais de présence similaires à la requête initiale de présence émise par le terminal mobile TM permet de ne pas modifier les protocoles d'identification intégrés dans les serveurs sources existants. Les requêtes relais de présence sont dans un format source compatible avec le serveur source concerné SS1, SS2, SS3 ou SS4. Le serveur intermédiaire SPV est donc perçu par les serveurs sources SS1, SS2, SS3, SS4 comme étant le terminal mobile TM. Le serveur intermédiaire SPV correspond donc virtuellement au terminal mobile TM.

On peut noter que le réseau de communication objet de l'invention, est essentiellement caractérisé par le fait que le serveur intermédiaire SPV est configuré pour recevoir des informations aux formats sources en provenance des serveurs sources SS1, SS2, SS3, SS4 ; transformer au format cible les informations reçues aux formats sources ; transmettre au terminal mobile TM les informations dans le format cible. Le fait que le serveur intermédiaire SPV reçoive les requêtes initiales au format cible et les transforme au format source de manière à émettre des requêtes relais vers les serveurs sources identifiés, ne sont pas des étapes nécessaires au fonctionnement de l'invention. En effet, on pourrait prévoir que les serveurs sources SS1, SS2, SS3, SS4 soient configurés pour traiter directement les requêtes initiales au format cible émises par le terminal mobile TM. Ce traitement des requêtes initiales est réalisé par l'intermédiaire de processeurs, applications informatiques ou tous autres softwares/hardwares équivalents intégrés les serveurs sources SS1, SS2, SS3, SS4. Dans ce cas :
- soit le terminal mobile TM émet directement les requêtes initiales vers les serveurs sources concernés,
- soit le serveur intermédiaire SPV intercepte les (la) requêtes initiales et les (la) redirige telles qu'elles (c'est-à-dire au format cible) vers lesdits serveurs sources. Dans ce dernier cas, le serveur intermédiaire SPV est agencé comme une passerelle (ou « gateway ») en ce qui concerne les requêtes initiales.

Le mode préféré de réalisation de l'invention va maintenant être décrit plus en détail en se rapportant aux figures 3 à 7. Le terminal mobile TM est préférentiellement configuré pour afficher sur son écran les différentes fonctionnalités proposées (MAIL, IM, BLOG ou autre) en tant que contacts (ou « Buddy ») dans sa liste de contacts de messagerie instantanée (ou « Buddy list »). Pour ce faire, le terminal mobile TM intègre une application informatique de messagerie instantanée IM. Pour les développeurs, cette application informatique de messagerie instantanée IM peut être la seule application à intégrer dans le terminal mobile TM.

En pratique, dès que l'utilisateur décide d'accéder aux différentes fonctionnalités proposées (via le menu de son terminal mobile TM), l'écran affiche une liste de contacts de messagerie instantanée dans laquelle sont présents : ses contacts à proprement parler (zone écran Z1) et les fonctionnalités MAIL, BLOG ou autre (zone écran Z2). Cette liste de contacts enrichie est au format HTML, ou dans un autre format classiquement utilisé en messagerie instantanée.

Pour lancer une fonctionnalité, l'utilisateur doit inscrire dans la zone d'écriture texte ZT du terminal mobile TM, le nom de la fonctionnalité. Par exemple, il tapera le mot « MAIL » s'il souhaite utiliser la fonctionnalité MAIL, ou le mot « BLOG » s'il souhaite utiliser la fonctionnalité BLOG, etc. Dans une variante de réalisation non représentée, les fonctionnalités MAIL, BLOG, ···, peuvent être associées à des numéros, des symboles ou de manière plus générale à des messages texte prédéfinis. Dans ce cas, l'utilisateur inscrira dans la zone texte ZT, le message texte associé à la fonctionnalité qu'il souhaite utiliser. Ce message texte est ensuite envoyé vers le serveur intermédiaire SPV au format cible, par exemple au format HTML. On comprend que le message texte envoyé correspond à une requête initiale.

Pour utiliser la messagerie instantanée IM, il suffit que l'utilisateur inscrive dans la zone texte ZT, le nom du ou des contacts C1, C2, C3, C4 avec lequel il souhaite communiquer, puis d'envoyer ce message texte (au format cible, par exemple au format HTML) vers le serveur intermédiaire SPV. En pratique, l'utilisateur utilise la fonction IM de la même manière que dans l'art antérieur.

En se rapportant à la figure 3, dans le cas où le message texte envoyé est « MAIL » (ou un message texte associé à la fonction MAIL), le serveur intermédiaire SPV est capable de « comprendre » ce message pour établir une connexion avec le serveur source MAIL SS2 correspondant. Un fonctionnement similaire se produit lorsque le message texte envoyé correspond à la fonction BLOG ou une autre fonction.

En se rapportant à la figure 4, dans le cas où le message texte envoyé correspond au nom du ou des contacts C1, C2, C3, C4 (figure 4) le serveur intermédiaire SPV est capable de « comprendre » ce message pour établir une connexion avec le serveur source IM SS1 correspondant.

Pour comprendre les messages textes qu'il reçoit, le serveur intermédiaire SPV comporte avantageusement une zone-mémoire dans lequel ces messages textes sont associés aux requêtes relais destinées à être émises vers les serveurs sources SS1, SS2, SS3, SS4. Par exemple, lorsqu'il reçoit le message texte (au format cible) associé à la fonction MAIL, le serveur intermédiaire SPV comporte un logiciel capable d'analyser ce message texte et de l'associer à la requête relais destinée au serveur source MAIL SS2 (la requête relais étant directement au format source associé à ce serveur source). De même, lorsque le serveur intermédiaire SPV reçoit le message texte associé à un véritable contact C1 de sa « Buddy list », le serveur intermédiaire SPV analyse ce message texte et l'associe à la requête relais destinée au serveur source IM SS1.

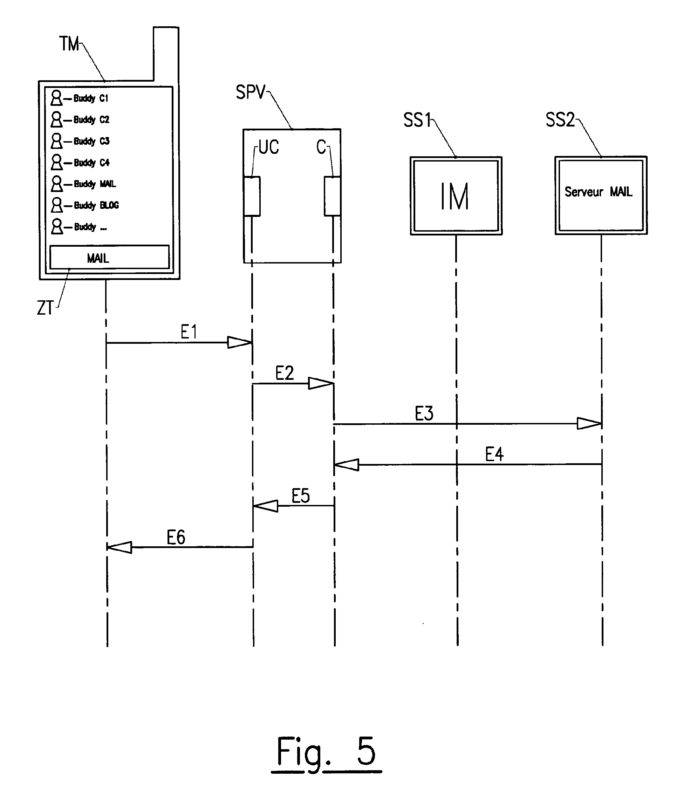

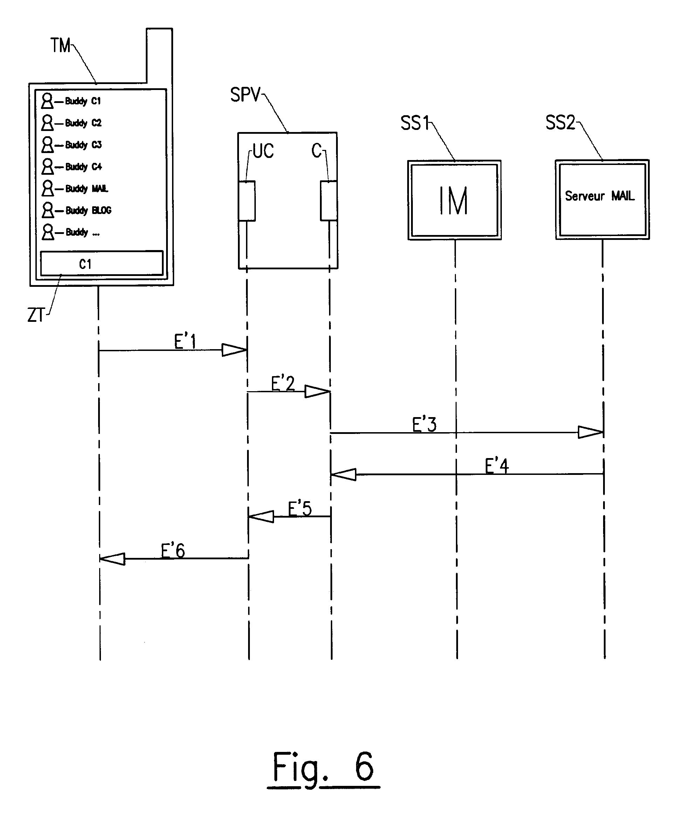

Ces différentes étapes sont schématisées sur les figures 5 et 6. Sur la figure 5, le terminal mobile TM transmet le message texte « MAIL » vers le serveur intermédiaire SPV (étape E1). L'unité centrale UC du serveur intermédiaire SPV analyse le message texte et comprend qu'il s'agit de l'exécution de la fonction MAIL et non d'un contact de messagerie instantanée. Le serveur intermédiaire SPV détermine alors la requête relais associée au message texte « MAIL » et commande le connecteur C pour qu'il établisse une connexion avec le serveur source MAIL SS2 (étape E2). Le serveur intermédiaire SPV transmet la requête relais au serveur source MAIL SS2 (étape E3). Ce dernier traite la requête relais et transmet au serveur intermédiaire SPV les informations demandées (étape E4). L'unité centrale UC du serveur intermédiaire SPV transforme les informations au format source (étape E5). Le serveur intermédiaire SPV transfère ces informations au terminal mobile TM (étape E6).

Dans l'exemple représenté sur la figure 6, le terminal mobile TM transmet le message texte « C1 » vers le serveur intermédiaire SPV (étape E'1). L'unité centrale UC du serveur intermédiaire SPV analyse ce message texte et comprend qu'il s'agit d'un contact avec qui l'utilisateur souhaite converser. Le serveur intermédiaire SPV détermine alors la requête relais associée au message texte « C1 » et commande le connecteur C pour qu'il établisse une connexion avec le serveur source IM SS1 (étape E'2). Le serveur intermédiaire SPV transmet la requête relais au serveur source IM SS1 (étape E'3). Ce dernier traite la requête relais et transmet au serveur intermédiaire SPV les informations demandées (étape E'4). L'unité centrale UC du serveur intermédiaire SPV transforme les informations au format sources (étape E'5). Le serveur intermédiaire SPV transfère ces informations au terminal mobile TM (étape E'6).

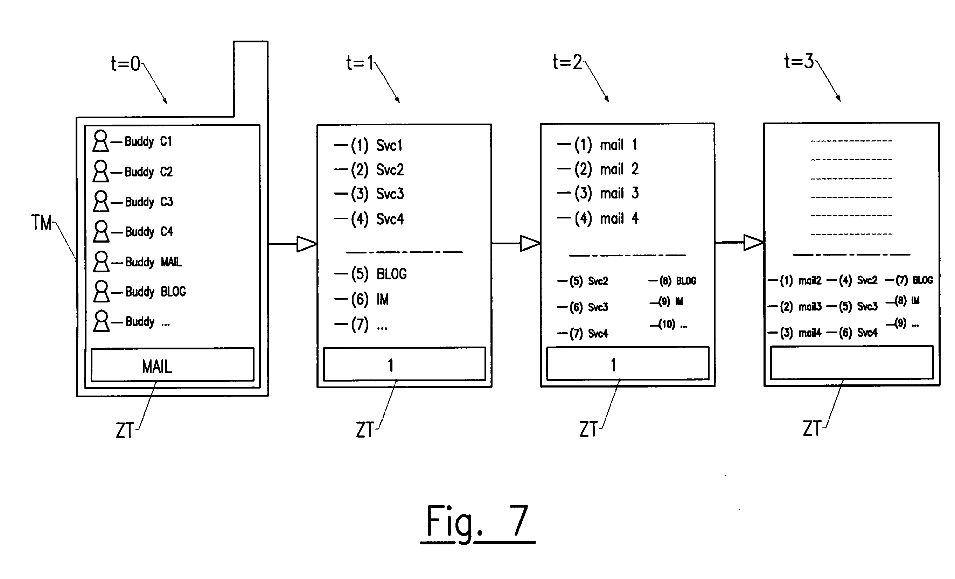

La figure 7 schématise de manière chronologique, différents types de représentation d'écran du terminal mobile TM, lorsqu'il met en oeuvre la fonction MAIL. Initialement (t=0), le terminal mobile TM affiche sur son écran les différentes fonctionnalités proposées (MAIL, IM, BLOG ou autre) en tant que contacts dans sa liste de contacts de messagerie instantanée.

Après avoir inscrit le mot « MAIL » dans la zone texte ZT et commandé l'envoi de ce message texte, différents services Sv1, Sv2, Sv3, Sv4, s'affichent (t=1). Ces services s'affichent sur l'écran selon le format cible associé à la messagerie instantanée, c'est-à-dire sous forme de document texte (éventuellement enrichi). On doit comprendre que la liste de ces services correspond à l'information demandée à l'étape précédente (t=0) et que chaque service affiché correspond à une nouvelle requête initiale. Chaque service Sv1, Sv2, Sv3, Sv4 correspond aux services mail traditionnellement proposés : réception/envoi e-mail Svc1, gestion du carnet d'adresse Svc2, règles de messages Svc3, option Sv4, etc. Chacun de ces services est associé à un message texte dédié (par exemple le chiffre '1' → Svc1 ; '2' → Svc2 ; '3' → Svc3 ; '4' → Svc4 ; ···). Pour sélectionner le service souhaité, l'utilisateur doit inscrire dans la zone texte ZT, le numéro correspond à ce service. Dans l'exemple de la figure 7, l'utilisateur inscrit le numéro 1 correspondant à la réception/envoi e-mail.

Après avoir inscrit le chiffre « 1 » dans la zone texte ZT et envoyé ce message texte, la liste des mails s'affiche (t=2). Ces mails s'affichent sur l'écran sous forme de document texte. On doit comprendre que la liste de ces mails correspond à l'information demandée à l'étape précédente (t=1) et que chaque mail correspond à une nouvelle requête initiale. Chaque mail est associé à un message texte dédié (par exemple '1' → mail 1 ; '2' → mail 2 ; '3' → mail 3 ; '4' → mail 4 ; ···). Pour sélectionner le mail qu'il souhaite consulter, l'utilisateur doit inscrire dans la zone texte ZT, le numéro correspond à ce mail. Dans l'exemple de la figure 7, l'utilisateur inscrit le numéro 1 correspondant à la lecture du mail 1.

Après avoir inscrit le chiffre « 1 » dans la zone texte ZT et envoyé ce message texte, le texte du mail 1 s'affiche (t=3). Ce mail s'affiche sur l'écran sous forme de document texte. On doit comprendre que le texte du mail 1 correspond à l'information demandée à l'étape précédente (t=2). Pour sélectionner la fonctionnalité désirée, l'utilisateur doit inscrire dans la zone texte ZT, le numéro correspond à cette fonction.

Il est important que l'utilisateur puisse avoir accès à tout moment aux autres fonctionnalités et/ou services et/ou mails qui lui avaient été communiqués. Pour ce faire, à chaque nouvelle étape, les informations précédemment communiquées sont toujours rappelées et inscrites sur l'écran du terminal mobile TM. Par exemple, sur le second écran (t=1), les fonctions BLOG, IM ou autres sont toujours proposées. Ces fonctions sont associées à un message texte dédié : par exemple, le chiffre '5' → BLOG ; '6' → IM ; '7' → ···, Pour sélectionner la fonctionnalité désirée, l'utilisateur doit inscrire dans la zone texte ZT, le numéro correspond à cette fonctionnalité. Il en est de même pour chaque écran successif.

On comprend qu'il est avantageux que le serveur intermédiaire SPV soit configuré pour garder en mémoire la chronologie des différentes requêtes initiales émises par le terminal mobile TM de manière à ce qu'un même message texte puisse être associé à des requêtes relais différentes selon l'instant où lesdites requêtes initiales sont émises par ledit terminal mobile. Dans l'exemple de la figure 7, on constate que le chiffre '1' est associé à t=1 au service SV1, à t=2 au mail 1 et à t=3 au mail 2. En pratique, l'unité centrale UC du serveur intermédiaire SPV permet de réaliser cette fonction.

## Revendications

1. Réseau de communication de transfert d'informations entre un terminal mobile et plusieurs serveurs sources comportant :
- au moins un terminal mobile (TM) configuré pour recevoir des informations dans un format cible,
- des serveurs sources (SS1, SS2, SS3, SS4) configurés pour délivrer des informations dans des formats sources,
**caractérisé par le fait que :**
- un serveur intermédiaire (SPV), indépendant des serveurs sources (SS1, SS2, SS3, SS4), est agencé entre le terminal mobile (TM) et lesdits serveurs sources de manière à ce que les informations à destination dudit terminal mobile transitent par ledit serveur intermédiaire,
- le serveur intermédiaire (SPV) est configuré pour recevoir des informations aux formats sources en provenance des serveurs sources (SS1, SS2, SS3, SS4),
- le serveur intermédiaire (SPV) est configuré pour transformer au format cible les informations reçues aux formats sources, et
- le serveur intermédiaire (SPV) est configuré pour transmettre au terminal mobile (TM) les informations dans le format cible.

2. Réseau selon la revendication 1, dans lequel :
- le terminal mobile (TM) est configuré pour émettre vers le serveur intermédiaire (SPV) des requêtes initiales permettant de recevoir des informations disponibles dans les serveurs sources (SS1, SS2, SS3, SS4), lesdites requêtes initiales étant au format cible, et
- le serveur intermédiaire (SPV) est configuré pour :
• analyser les requêtes initiales reçues et identifier les serveurs sources (SS1, SS2, SS3, SS4) dans lesquels sont disponibles les informations demandées, et
• émettre des requêtes relais vers les serveurs sources (SS1, SS2, SS3, SS4) afin de recevoir les informations demandées, lesdites requêtes relais étant émises dans des formats sources compatibles avec lesdits serveurs sources.

3. Réseau selon la revendication 1, dans lequel :
- le terminal mobile (TM) est configuré pour émettre des requêtes initiales permettant de recevoir des informations disponibles dans les serveurs sources (SS1, SS2, SS3, SS4), lesdites requêtes initiales étant au format cible,
- les serveurs sources (SS1, SS2, SS3, SS4) sont configurés pour traiter directement les requêtes initiales au format cible émises par le terminal mobile (TM), et
- le serveur intermédiaire (SPV) est configuré pour intercepter lesdites requêtes initiales et les rediriger telles qu'elles vers lesdits serveurs sources.

4. Réseau selon l'une quelconque des revendications précédentes, dans lequel le terminal mobile (TM) intègre une application informatique de messagerie instantanée, le format cible étant un format utilisé pour la messagerie instantanée, toutes les informations et requêtes échangées entre ledit terminal mobile et le serveur intermédiaire (SPV) transitant uniquement par un canal d'information (Ci1) utilisé pour la messagerie instantanée.

5. Réseau selon la revendication précédente, dans lequel toutes les informations et requêtes échangées entre le terminal mobile (TM) et le serveur intermédiaire (SPV) sont au format HTML.

6. Réseau selon l'une des revendications 4 ou 5 prise en combinaison avec l'une des revendications 2 ou 3, dans lequel le terminal mobile (TM) est configuré pour afficher sur son écran les requêtes initiales en tant que contacts dans la liste de contacts de messagerie instantanée.

7. Réseau selon la revendication précédente, dans lequel les requêtes initiales affichées sur l'écran du terminal mobile (TM) sont associées à des messages textes prédéfinis, le serveur intermédiaire (SPV) comportant une zone-mémoire dans lequel ces messages textes sont associés aux requêtes relais destinées à être émises vers les serveurs sources (SS1, SS2, SS3, SS4) afin de recevoir les informations demandées.

8. Réseau selon la revendication précédente, dans lequel le serveur intermédiaire (SPV) est configuré pour garder en mémoire la chronologie des différentes requêtes initiales émises par le terminal mobile (TM) de manière à ce qu'un même message texte puisse être associé à des requêtes relais différentes selon l'instant où lesdites requêtes initiales sont émises par ledit terminal mobile.

9. Réseau selon l'une quelconque des revendications précédentes, dans lequel le serveur intermédiaire (SPV) est configuré pour transmettre au terminal mobile (TM), en même temps que les informations demandées, une liste de requêtes initiales destinée à être affichée sous forme de messages textes sur l'écran dudit terminal mobile.

10. Réseau selon l'une des revendications précédentes, dans lequel :
- le terminal mobile (TM) est configuré pour émettre une requête initiale de présence à destination du serveur intermédiaire (SPV), ladite requête initiale de présence contenant des informations d'identification de l'utilisateur dudit terminal, et
- le serveur intermédiaire (SPV) est configuré pour analyser les informations d'identification de l'utilisateur, et après vérification, autoriser la connexion avec le terminal mobile (TM) et allouer un espace mémoire dans lequel il gardera une copie des informations et requêtes qui vont circuler.

11. Réseau selon l'une des revendications précédentes, dans lequel :
- le serveur intermédiaire (SPV) est configuré pour émettre des requêtes relais de présence à destination des serveurs sources (SS1, SS2, SS3, SS4), lesdites requêtes relais de présence étant dans un format source associé aux serveurs sources et contenant des informations d'identification de l'utilisateur du terminal mobile (TM), et
- les serveurs sources (SS1, SS2, SS3, SS4) sont configurés pour analyser les informations d'identification de l'utilisateur, et après vérification, autoriser la connexion avec le serveur intermédiaire (SPV).

12. Réseau selon la revendication précédente prise en combinaison avec la revendication 10, dans lequel les requêtes relais de présence émises par le serveur intermédiaire (SPV) sont similaires à la requête initiale de présence émise par le terminal mobile (TM) de manière à ce que ledit serveur intermédiaire soit perçu par les serveurs sources (SS1, SS2, SS3, SS4) comme étant ledit terminal mobile.

13. Procédé de gestion de transfert d'informations dans le réseau de communication pour gérer le transfert des informations selon l'une quelconque des revendications précédentes, dans lequel :
- au moins un terminal mobile (TM) est configuré pour recevoir des informations dans un format cible, et
- des serveurs sources (SS1, SS2, SS3, SS4) sont configurés pour délivrer des informations dans des formats sources,
**le procédé étant caractérisé par le fait que :**
- le terminal mobile se connecte à un serveur intermédiaire (SPV) indépendant des serveurs sources (SS1, SS2, SS3, SS4),
- le serveur intermédiaire (SPV) se connecte à un des serveurs sources (SS1, SS2, SS3, SS4) de manière à ce que les informations à destination du terminal mobile (TM) transitent par ledit serveur intermédiaire,
- le serveur source (SS1, SS2, SS3, SS4) auquel est connecté le serveur intermédiaire (SPV) transmet à ce dernier des informations au format source,
- le serveur intermédiaire (SPV) transforme au format cible les informations reçues au format source, et
- le serveur intermédiaire transmet vers le terminal mobile les informations au format cible.

14. Procédé selon la revendication 13, dans lequel :
- le terminal mobile (TM) émet vers le serveur intermédiaire (SPV) une requête initiale permettant de recevoir des informations disponibles dans les serveurs sources (SS1, SS2, SS3, SS4), ladite requête initiale étant au format cible, et
- le serveur intermédiaire (SPV) :
• analyse la requête initiale reçue et identifie le serveur source (SS1, SS2, SS3, SS4) dans lequel sont disponibles les informations demandées, et
• émet une requête relais vers le serveur source identifié (SS1, SS2, SS3, SS4) afin de recevoir les informations demandées, ladite requête relais étant émise dans un format source compatible avec ledit serveur source identifié.

15. Procédé selon la revendication 13, dans lequel :
- le terminal mobile (TM) émet vers le serveur intermédiaire (SPV) une requête initiale permettant de recevoir des informations disponibles dans un serveur source (SS1, SS2, SS3, SS4), ladite requête initiale étant au format cible, et
- le serveur source (SS1, SS2, SS3, SS4) traitant directement la requête initiale au format cible émise par le terminal mobile (TM), le serveur intermédiaire (SPV) interceptant ladite requête initiale et la redirigeant telle qu'elle vers ledit serveur source.

16. Procédé selon l'une des revendications 13 à 15, dans lequel le terminal mobile (TM) intègre une application informatique de messagerie instantanée, le format cible étant un format utilisé pour la messagerie instantanée, toutes les informations et requêtes échangées entre ledit terminal mobile et le serveur intermédiaire (SPV) transitant uniquement par un canal d'information (Ci1) utilisé pour la messagerie instantanée.

17. Procédé selon la revendication 16, dans lequel toutes les informations et requêtes échangées entre le terminal mobile (TM) et le serveur intermédiaire (SPV) sont au format HTML.

18. Procédé selon l'une des revendications 16 ou 17 prises en combinaison avec l'une des revendications 14 ou 15, dans lequel les requêtes initiales sont affichées sur l'écran du terminal mobile (TM) en tant que contacts dans la liste de contacts de messagerie instantanée.

19. Procédé selon la revendication 18, dans lequel l'émission d'une requête initiale est réalisée en saisissant un message texte prédéfini associé à ladite requête dans la zone d'écriture texte du terminal mobile (TM), ledit message texte étant émis vers le serveur intermédiaire (SPV).

20. Procédé selon l'une des revendications 18 ou 19, dans lequel les requêtes initiales affichées sur l'écran du terminal mobile (TM) sont associées à des messages textes prédéfinis, le serveur intermédiaire (SPV) associant ces messages textes aux requêtes relais destinées à être émises vers les serveurs sources (SS1, SS2, SS3, SS4) afin de recevoir les informations demandées.

21. Procédé selon la revendication 20, dans lequel la chronologie des différentes requêtes initiales émises par le terminal mobile (TM) est gardée en mémoire dans le serveur intermédiaire (SPV) de manière à ce qu'un même message texte puisse être associé à des requêtes relais différentes selon l'instant où lesdites requêtes initiales sont émises par ledit terminal mobile.

22. Procédé selon l'une des revendications 13 à 21, dans lequel le serveur intermédiaire (SPV) transmet au terminal mobile (TM), en même temps que les informations demandées, une liste de requête initiale destinée à être affichée sous forme de messages textes sur l'écran dudit terminal mobile.

23. Procédé selon l'une des revendications 13 à 22, dans lequel :
- lorsque l'utilisateur du terminal mobile (TM) souhaite se connecter au serveur intermédiaire (SPV), ledit terminal émet préalablement une requête initiale de présence à destination dudit serveur intermédiaire, ladite requête initiale de présence contenant des informations d'identification de l'utilisateur dudit terminal,
- le serveur intermédiaire (SPV) analyse les informations d'identification de l'utilisateur, et après vérification, autorise la connexion avec le terminal mobile (TM) et alloue un espace mémoire dans lequel il gardera une copie des informations et requêtes qui vont circuler.

24. Procédé selon l'une des revendications 1 3 à 23, dans lequel :
- pour établir une connexion entre le serveur intermédiaire (SPV) et un serveur source (SS1, SS2, SS3), ledit serveur intermédiaire émet préalablement une requête relais de présence à destination dudit serveur sources, ladite requête relais de présence étant dans un format source associé audit serveur source contenant des informations d'identification de l'utilisateur du terminal mobile (TM),
- le serveur source (SS1, SS2, SS3, SS4) analyse les informations d'identification de l'utilisateur, et après vérification, autorise la connexion avec le serveur intermédiaire (SPV).

25. Terminal mobile équipé d'un écran et intégrant une application informatique de messagerie instantanée, ce terminal étant destiné à échanger des informations avec plusieurs serveurs sources dans un réseau de communication selon l'une quelconque des revendications 1 à 12, **caractérisé en ce qu'**il est configuré pour présenter sur son écran des requêtes en tant que contacts dans sa liste de contacts de messagerie instantanée, lesdites requêtes étant associées à des messages textes prédéfinis.
